## Europäisches Patentamt

## European Patent Office

## Office européen des brevets

(11) Veröffentlichungsnummer: **0 227 902**
**B1**

(12) **EUROPÄISCHE PATENTSCHRIFT**

(45) Veröffentlichungstag der Patentschrift:
08.03.89

(51) Int. Cl.⁴: **H01T 19/00, B29C 59/10**

(21) Anmeldenummer: **86114411.1**

(22) Anmeldetag: **17.10.86**

(54) Vorrichtung zum kontinuierlichen Behandeln von Oberflächen.

(30) Priorität: **14.12.85 DE 3544282**

(43) Veröffentlichungstag der Anmeldung:
08.07.87 Patentblatt 87/28

(45) Bekanntmachung des Hinweises auf die Patenterteilung:
08.03.89 Patentblatt 89/10

(84) Benannte Vertragsstaaten:
AT BE CH DE ES FR GB GR IT LI LU NL SE

(56) Entgegenhaltungen:
EP-A- 0 073 427
CH-A- 562 676
DE-A- 1 489 001
US-A- 2 844 731
US-A- 3 503 859

(73) Patentinhaber: **Ahlbrandt, Andreas, Dipl.-Ing., Beethovenstrasse 3, D-6420 Lauterbach(DE)**

(72) Erfinder: **Ahlbrandt, Andreas, Dipl.-Ing., Beethovenstrasse 3, D-6420 Lauterbach(DE)**

(74) Vertreter: **Schlagwein, Udo, Dipl.-Ing., Anwaltsbüro Ruppert & Schlagwein Frankfurter Strasse 34, D-6350 Bad Nauheim(DE)**

## Beschreibung

Die Erfindung bezieht sich auf eine Vorrichtung zum kontinuierlichen Behandeln der Oberfläche von Folien durch elektrische Sprühentladung, bei der eine die Folie umlenkende Behandlungswalze in einer nach außen abgedichteten, verminderten Druck aufweisenden Behandlungskammer angeordnet ist und in die die Folie zwischen jeweils zwei Walzen dichtend hineingeführt und aus der sie entsprechend zwischen zwei Walzen herausgeführt ist und welche zumindest eine der Behandlungswalze gegenüberliegende, aus einer Isolierung und einem darin eingebetteten Hochspannungteil bestehende Sprühelektrode hat. Eine solche Vorrichtung ist in der DE-OS 3 134 615 beschrieben.

In jüngster Zeit hat man herausgefunden, daß eine Koronabehandlung von Folien bereits bei geringem Unterdruck weit vorteilhafter ist als bei Normaldruck. Die Korona bildet sich dabei bereits bei niedrigerer Spannung, so daß der Energieverbrauch und die Bildung von Ozon geringer sind. Letzteres ist im Hinblick auf den Umweltschutz bedeutsam. Das niedrigere Spannungsniveau führt zudem dazu, daß die die Vorrichtung verlassende Folie weit geringer elektrostatisch aufgeladen ist. Das führt zu besseren Haftungs- und Benetzungseigenschaften der Folie, was zum Beispiel für als fotografisches Trägermaterial dienende Folien einen großen Vorteil darstellt.

Die Vorrichtung nach der genannten DE-OS 3 134 615 weist innerhalb der Behandlungskammer die Sprühelektroden auf. Das führt bei höheren Spannungen dazu, daß die Sprühelektroden nicht nur in Richtung der Behandlungswalze sprühen, sondern auch in anderen Richtungen, insbesondere zu den Wänden der Behandlungskammer hin. Das gilt insbesondere auch für die Hochspannungszuführungen, welche in die Behandlungskammer hinein zu den Sprühelektroden geführt werden müssen. Dieses Sprühen in nicht erwünschte Richtungen führt zu einem Energieverlust und mindert die Behandlungsgüte der zu behandelnden Folie. Hiervon abgesehen ist die vorbekannte Vorrichtung relativ aufwendig aufgebaut, da sie nicht nur innerhalb der Behandlungskammer angeordnete Sprühelektroden hat, sondern die Zu- und Abführung der Folie jeweils über zwei Walzenpaare durch jeweils eine Vorkammer hindurch erfolgt und zusätzlich unterhalb der Behandlungswalze nochmals zwei Umlenkwalzen vorgesehen sind.

Der Erfindung liegt die Aufgabe zugrunde, eine Vorrichtung der eingangs genannten Art derart zu gestalten, daß sie möglichst einfach aufgebaut ist und sich mit ihr eine möglichst ausschließlich auf die zu behandelnde Folie gerichtete Korona erzielen läßt.

Diese Aufgabe wird erfindungsgemäß dadurch gelöst, daß die Sprühelektrode mit ihrer Isolierung einen Teil der Wandung der Behandlungskammer bildet.

Durch diese Gestaltung sprüht die Sprühelektrode ausschließlich in die Behandlungskammer hinein in Richtung auf die Behandlungswalze. Diese auf die Behandlungswalze gerichtete Koronaentladung ergibt sich nicht nur daraus, daß die Behandlungswalze an umgekehrtes Potential angeschlossen ist wie die Sprühelektrode, sondern auch deshalb, weil in der Behandlungskammer verminderter Druck herrscht, was die Koronaausbildung begünstigt. Da sich der Hochspannungsteil und damit auch die Hochspannungszuführungen außerhalb der Behandlungskammer befinden, wo Normaldruck herrscht, ist dort eine Koronaentladung nicht zu befürchten. Dank des erfindungsgemäßen Konstruktionsprinzips ist die Vorrichtung einfacher aufgebaut als die vorbekannte und führt bei geringerem Energieverbrauch zu besseren Behandlungsergebnissen.

Zum Einfädeln der Folie und zur Inspektion der Vorrichtung ist es vorteilhaft, wenn die Sprühelektrode in einem nach oben hochklappbaren Deckel der Behandlungskammer vorgesehen ist.

Ganz besonders einfach ist die Behandlungskammer zwecks Einlegen der Folie zu öffnen, wenn sie aus zwei jeweils von einer Seite her bis zur Mitte der Behandlungswalze reichenden Kammerhälften besteht, welche jeweils eine der Behandlungswalze gegenüberliegende Sprühelektrode aufweisen und wenn die Kammerhälften nach beiden Seiten der Behandlungswalze hin auseinanderfahrbar ausgebildet sind.

Ganz wesentlich vereinfacht sich die Vorrichtung im Vergleich zu der vorbekannten Vorrichtung gemäß der DE-OS 3 134 615, wenn unterhalb der Behandlungswalze achsenparallel zu ihr mit geringem Abstand zueinander zwei Umlenkwalzen vorgesehen sind, zwischen denen hindurch die einlaufende und herauslaufende Folie geführt ist und wenn unterhalb der Umlenkwalzen, achsenparallel zu diesen und genau zwischen ihnen eine Abdichtwalze zum Abdichten des Raumes zwischen der ein- und auslaufenden Folie im Bereich der Umlenkwalzen vorgesehen ist. Durch diese Gestaltung genügen zum Einlaufen und Herauslaufen der Folie insgesamt nur drei Walzen. Da die Umlenkwalzen unterhalb der Behandlungswalze angeordnet sind, erreicht man ohne zusätzliche Umlenkwalzen eine ausreichend weite Umschlingung der Behandlungswalze durch die zu behandelnde Folie.

Um sich unterschiedlich dicken Folien anpassen zu können und das Einfädeln der Folie zu erleichtern, ist es vorteilhaft, wenn die Abdichtwalze auf einer von der Behandlungswalze zwischen die Umlenkwalzen führenden Geraden begrenzt verschiebbar angeordnet ist.

Eine gute Abdichtung des Zwickels zwischen den beiden Umlenkwalzen ist besonders leicht erzielbar, wenn die Abdichtwalze eine in radialer Richtung elastisch verformbare Mantelfläche hat.

Durch die Anordnung der beiden Umlenkwalzen und der Abdichtwalze ergibt es sich, daß die Abdichtwalze sowohl die Folie in die Vorrichtung hineinziehen als auch aus ihr herausziehen kann. Es genügt deshalb ein einziger Antrieb für die Abdichtwalze.

Vor allem für dünne Folien ist es jedoch zwecks Vermeidung eines Reißens oder der Faltenbildung vorteilhaft, wenn gemäß einer anderen Ausgestaltung der Erfindung die Abdichtwalze und die beiden Umlenkwalzen durch drei miteinander kämmende Zahnräder angetrieben sind.

Die Wandungen der Behandlungskammer können dicht neben der Behandlungswalze verlaufen, wenn die die Behandlungswalze umgebenden Wandteile der Behandlungskammer aus einem Isoliermaterial bestehen.

Die Erfindung läßt zahlreiche Ausführungsformen zu. Eine davon ist schematisch in der Zeichnung dargestellt und wird nachfolgend beschrieben. Diese zeigt in

Fig. 1 einen Querschnitt durch eine erfindungsgemäß gestaltete Vorrichtung,

Fig. 2 einen Längsschnitt durch die Vorrichtung nach Figur 1.

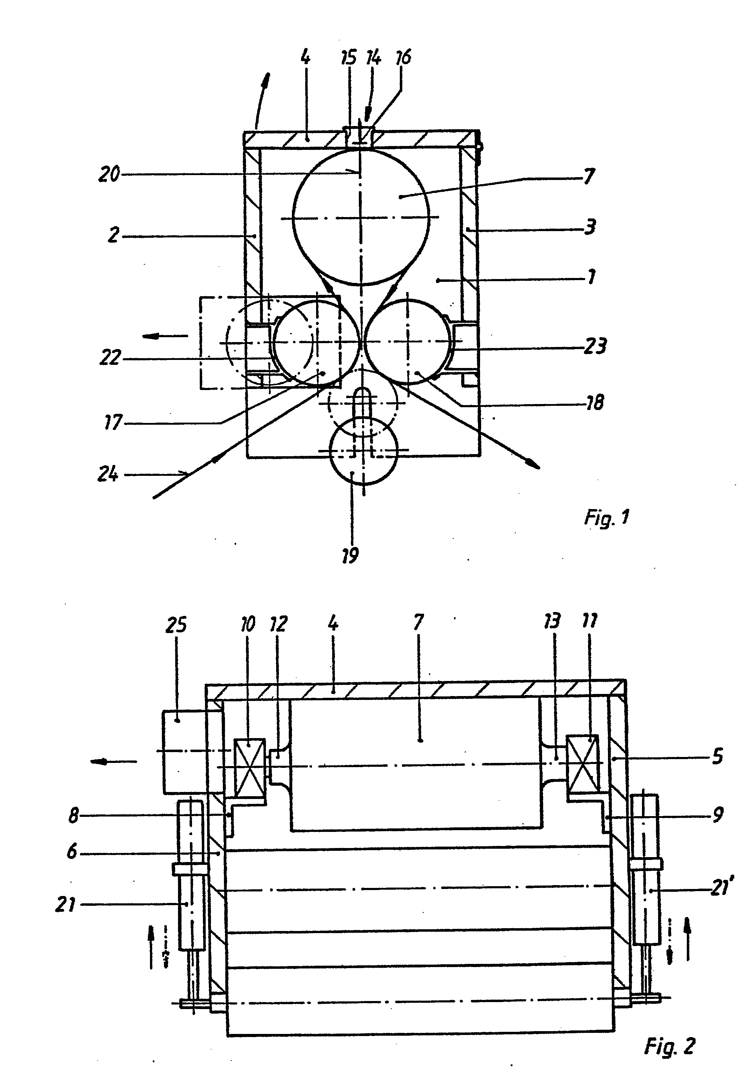

Die Figur 1 zeigt eine Behandlungskammer 1, welche aus zwei Seitenwänden 2, 3, einem Deckel 4 und in Figur 2 zu sehenden Stirnwänden 5, 6 gebildet ist. Diese Seitenwände 2, 3, Stirnwände 5, 6 und der Deckel 4 bestehen aus einem Isoliermaterial. Im Inneren der Behandlungskammer 1 ist eine Behandlungswalze 7 drehbar angeordnet. Hierzu sind, was in Figur 2 zu erkennen ist, innenseitig an den Stirnwänden 5, 6 Konsolen 8, 9 befestigt, auf denen jeweils ein Lagerbock 10, 11 steht, in dem jeweils ein Zapfen 12, 13 der Behandlungswalze 7 gelagert ist. Natürlich könnte die Behandlungswalze 7 mit ihren Zapfen 12, 13 die Stirnwände 5, 6 auch durchdringen und außerhalb der Behandlungskammer 1 gelagert sein. Gezeigt ist in der Figur 2 desweiteren ein Luftabsaugstutzen 25, über den aus der Behandlungskammer 1 zur Erzeugung eines Unterdruckes Luft abgesaugt werden kann.

Wie die Figur 1 zeigt, ist im Deckel 4 der Behandlungswalze 7 gegenüberliegend eine Sprühelektrode 14 angeordnet, die aus einer Isolierung 15 und einem Hochspannungsteil 16 besteht. Wichtig für die Erfindung ist, daß ein Teilbereich der Isolierung 15 einen Teil der Wandung der Behandlungskammer 1 bildet.

Nach unten hin ist die Behandlungskammer 1 durch zwei Umlenkwalzen 17, 18 und eine Abdichtwalze 19 begrenzt. Alle Walzen verlaufen achsenparallel zueinander. Die Abdichtwalze 19 befindet sich genau auf einer Geraden 20, die von der Mitte der Behandlungswalze 7 zwischen den Umlenkwalzen 17, 18 verläuft und ist auf dieser Geraden 20 begrenzt verstellbar, wozu zwei Hubzylinder dienen, von denen ein Hubzylinder 21 in Figur 2 dargestellt ist.

Die Figur 1 zeigt desweiteren, daß die Umlenkwalzen 17, 18 auf einem Teil ihrer Mantelfläche mittels Dichtstücken 22, 23 zu den Seitenwänden 2, 3 hin abgedichtet sind. Nicht gezeigt sind stirnseitige Dichtmittel. Schematisch angedeutet in Figur 1 ist eine Folie 24, welche in der Vorrichtung behandelt werden soll und die in Figur 1 gesehen von links her zwischen der Umlenkwalze 17 und der Abdichtwalze 19 in die Vorrichtung einläuft, dann die Behandlungswalze 7 umschlingt und anschließend zwischen der Umlenkwalze 18 und der Abdichtwalze 19 die Vorrichtung wieder verläßt.

Nicht dargestellt ist eine Ausführungsform, bei der die Behandlungskammer aus zwei Kammerhälften besteht, wobei jede Kammerhälfte eine Sprühelektrode und eine der Umlenkwalzen 17, 18 enthält. Die beiden Kammerhälften sind auseinanderfahrbar ausgebildet, damit die Folie 24 besonders leicht eingeführt werden kann.

Auflistung der verwendeten Bezugszeichen

1 Behandlungskammer
2 Seitenwand
3 Seitenwand
4 Deckel
5 Stirnwand
6 Stirnwand
7 Behandlungswalze
8 Konsole
9 Konsole
10 Lagerbock
11 Lagerbock
12 Zapfen
13 Zapfen
14 Sprühelektrode
15 Isolierung
16 Hochspannungsteil
17 Umlenkwalze
18 Umlenkwalze
19 Abdichtwalze
20 Gerade
21 Hubzylinder
22 Dichtstück
23 Dichtstück
24 Folie
25 Luftabsaugstutzen

## Patentansprüche

1. Vorrichtung zum kontinuierlichen Behandeln der Oberfläche von Folien (24) durch elektrische Sprühentladung, bei der eine die Folie umlenkende Behandlungswalze (7) in einer nach außen abgedichteten, verminderten Druck aufweisenden Behandlungskammer (1) angeordnet ist und in die die Folie zwischen jeweils zwei Walzen (17, 19) dichtend hineingeführt und aus der sie entsprechend zwischen zwei Walzen (18, 19) herausgeführt ist und welche zumindest eine der Behandlungswalze gegenüberliegende, aus einer Isolierung (15) und einem darin eingebetteten Hochspannungsteil (16) bestehende Sprühelektrode (14) hat, dadurch gekennzeichnet, daß die Sprühelektrode (14) mit ihrer Isolierung (15) einen Teil der Wandung der Behandlungskammer (1) bildet.

2. Vorrichtung nach Anspruch 1, dadurch gekennzeichnet, daß die Sprühelektrode (14) in einem nach oben hochklappbaren Deckel (4) der Behandlungskammer (1) vorgesehen ist.

3. Vorrichtung nach Anspruch 1, dadurch gekennzeichnet, daß die Behandlungskammer (1) aus zwei jeweils von einer Seite her bis zur Mitte der Behandlungswalze (7) reichenden Kammerhälften besteht, welche jeweils eine der Behandlungswalze (7) gegenüberliegende Sprühelektrode aufweisen und daß die Kammerhälften nach beiden Seiten der Behandlungswalze (7) hin auseinanderfahrbar ausgebildet sind.

4. Vorrichtung nach einem oder mehreren der vorangehenden Ansprüche, dadurch gekennzeichnet, daß unterhalb der Behandlungswalze (7) achsenparallel zu ihr mit geringem Abstand zueinander zwei Umlenkwalzen (17, 18) vorgesehen sind, zwischen denen hindurch die einlaufende und herauslaufende Folie (24) geführt ist und daß unterhalb der Umlenkwalzen (17, 18), achsenparallel zu diesen und genau zwischen ihnen eine Abdichtwalze (19) zum Abdichten des Raumes zwischen der ein- und auslaufenden Folie (24) im Bereich der Umlenkwalzen (17, 18) vorgesehen ist.

5. Vorrichtung nach einem oder mehreren der vorangehenden Ansprüche, dadurch gekennzeichnet, daß die Abdichtwalze (19) auf einer von der Behandlungswalze (7) zwischen die Umlenkwalzen (17, 18) führenden Ebene (20) begrenzt verschiebbar angeordnet ist.

6. Vorrichtung nach einem oder mehreren der vorangehenden Ansprüche, dadurch gekennzeichnet, daß die Abdichtwalze (19) eine in radialer Richtung elastisch verformbare Mantelfläche hat.

7. Vorrichtung nach einem oder mehreren der vorangehenden Ansprüche, dadurch gekennzeichnet, daß die Abdichtwalze (19) angetrieben ist.

8. Vorrichtung nach einem oder mehreren der vorangehenden Ansprüche, dadurch gekennzeichnet, daß die Abdichtwalze (19) und die beiden Umlenkwalzen (17, 18) durch drei miteinander kämmende Zahnräder angetrieben sind.

9. Vorrichtung nach einem oder mehreren der vorangehenden Ansprüche, dadurch gekennzeichnet, daß die die Behandlungswalze (7) umgebenden Wandbereiche der Behandlungskammer (1) aus einem Isoliermaterial bestehen.

## Claims

1. Device for the continuous surface treatment of film (24) by means of electrical corona discharge, the device having a treatment roller (7) for redirecting the film and being arranged in a pressure reduced treatment chamber (1) sealed to the outside, the film being fed into the treatment chamber (1) between two rollers (17, 19) so that it is sealed and being led correspondingly out of the device between two rollers (18, 19), the device having at least one corona discharge electrode, in a position opposite to the treatment roller (7), consisting of an insulation (15) in which a high voltage element (16) is embedded, characterized in that the corona discharge electrode (14) and its insulation (15) form a part of the treatment chamber wall (1).

2. The device according to claim 1, characterized in that the corona discharge electrode (14) is provided in a lid of the treatment chamber (1) which opens upwards.

3. The device according to claim 1, characterized in that the treatment chamber (1) consists of two halves, each extending from one side of the treatment roller (7) and reaching to the centre of the latter, the treatment chamber (1) having a corona discharge electrode (14) positioned opposite to the treatment roller (7) and characterized in that the chamber halves are constructed so as to be separable to both sides of the treatment roller (7).

4. Device according to one or more of the previous claims, characterized in that provided underneath and axially parallel to the treatment roller (7) are two redirecting rollers (17, 18) placed at a slight distance from each other, between which the film (24) is led into and led out of the device and characterized in that provided underneath and axially parallel to the redirecting rollers (17, 18) and located exactly between the latter, is a sealing roller (19) for sealing the space between the film (24) being led into and led out of the device in the region of the redirecting rollers (17, 18).

5. Device according to one or more of the previous claims, characterized in that the sealing roller (19) is constructed so as to be slidable, to a certain limit, between the redirecting rollers (17, 18) at one of the treatment roller's guiding planes (20).

6. Device according to one or more of the previous claims, characterized in that the sealing roller (19) has a cylindrical surface area which in radial direction is workable in the same way as elastic.

7. Device according to one or more of the previous claims, characterized in that the sealing roller (19) is driven.

8. Device according to one or more of the previous claims, characterized in that the sealing roller (19) and both the redirecting rollers (17, 18) are driven by three intermeshing gears.

9. Device according to one or more of the previous claims, characterized in that the wall regions of the treatment chamber (1) surrounding the treatment roller (7) consist of insulating material.

## Revendications

1. Appareil pour le traitement continu de la surface de feuilles (24) par une décharge électrique par effet corona, dans lequel un tambour de traitement (7), faisant changer la feuille de direction, est disposé dans une chambre de traitement étanche par rapport à l'extérieur et soumise à une sous-pression et dans lequel la feuille est introduite de manière étanche à chaque fois entre deux tambours (17, 19) et duquel la feuille ressort de manière correspondante entre deux tambours (18, 19) et qui comporte au moins une électrode d'émission (14) disposée en vis-à-vis du tambour de traitement, constituée d'une isolation (15) et d'un élément à haute tension (16) inséré dans celle-ci, caractérisé en ce que l'électrode d'émission (14) constitue avec son isolation (15) une partie de la paroi de la chambre de traitement (1).

2. Appareil selon la revendication 1, caractérisé en ce que l'électrode d'émission (14) est disposée dans un couvercle (4) de la chambre de traitement (1) pouvant être ouvert vers le haut.

3. Appareil selon la revendication 1, caractérisé en ce que la chambre de traitement (1) se compose de deux demi-chambres dont chacune s'étend d'un côté jusqu'au milieu du tambour de traitement (7), qui comportent chacune une électrode d'émission en vis-à-vis du tambour de traitement (7) et que les demi-chambres sont conformées déplaçables l'une par rapport à l'autre selon les deux côtés du tambour de traitement (7).

4. Appareil selon l'une ou plusieurs des revendications précédentes, caractérisé en ce que en dessous du tambour de traitement (7) sont disposés deux tambours de changement de direction (17, 18) d'axes parallèles au sien et faiblement éloignés l'un de l'autre, entre lesquels passe la feuille (24) qui entre et sort, et que en dessous des tambours du changement de direction (17, 18) est disposé un tambour d'étanchéité (19) d'axe parallèle à ceux-ci et disposé exactement entre eux pour rendre étanche l'espace entre la feuille entrante et la feuille sortante dans la zone des tambours de changement de direction (17, 18).

5. Appareil selon l'une ou plusieurs des revendication précédentes, caractérisé en ce que le tambour d'étanchéité (19) est monté coulissant de manière limitée dans un plan s'étendant à partir du tambour de traitement (7) entre les tambours de changement de direction (17, 18).

6. Appareil selon l'une ou plusieurs des revendications précédentes, caractérisé en ce que le tambour d'étanchéité (19) possède une surface extérieure déformable élastiquement en direction radiale.

7. Appareil selon l'une ou plusieurs des revendications précédentes, caractérisé en ce que le tambour d'étanchéité (19) est entraîné.

8. Appareil selon l'une ou plusieurs des revendications précédentes, caractérisé en ce que le tambour d'étanchéité (19) et les deux tambours de changement de direction (17, 18) sont entraînés par trois roues dentées engrenant l'une dans l'autre.

9. Appareil selon l'une ou plusieurs des revendications précédentes, caractérisé en ce que les zones de paroi de la chambre de traitement (1) entourant le tambour de traitement (7) sont constituées d'un matériau isolant.

Fig. 1

Fig. 2